**Europäisches Patentamt**

**European Patent Office**

**Office européen des brevets**

(19)

(11) Numéro de publication: **0 032 323**
**A1**

(12) # DEMANDE DE BREVET EUROPEEN

(21) Numéro de dépôt: **80400043.8**

(22) Date de dépôt: **14.01.80**

(51) Int. Cl.³: **F 16 J 15/34**

(43) Date de publication de la demande:
**22.07.81 Bulletin 81/29**

(84) Etats contractants désignés:
**DE GB IT NL SE**

(71) Demandeur: **Latty, Cyril Xavier**
**6 Avenue du Maréchal de Lattre de Tassigny**
**F-92210 Saint Clous(FR)**

(72) Inventeur: **Latty, Cyril Xavier**
**6 Avenue du Maréchal de Lattre de Tassigny**
**F-92210 Saint Clous(FR)**

(74) Mandataire: **Lavoix, Jean et al,**
**c o Cabinet Lavoix 2, Place D'Estienne D'Orves**
**F-75441 Paris Cedex 09(FR)**

(54) Garniture mécanique à simple effet d'étanchéité entre un arbre rotatif et une paroi fixe.

(57) Cette garniture est du type dans lequel un grain tournant 32 porté par une bague mobile 20 entraînée en rotation par l'arbre, est repoussée contre un grain fixe 22 porté par une bride de fixation 30. Un fourreau 12, muni de moyens 38 de solidarisation à l'arbre 5, traverse librement la bride et les grains fixe et mobile, et porte une pièce d'arrêt 36 à son extrémité opposée à la bague mobile 20. Une butée à aiguilles 40 est montée entre cette pièce d'arrêt 36 de la bride de fixation 30.

FIG.3

EP 0 032 323 A1

1

## Garniture mécanique à simple effet d'étanchéité entre un arbre rotatif et une paroi fixe

La présente invention concerne une garniture mécanique à simple effet destinée à assurer l'étanchéité du passage d'un arbre rotatif à travers une paroi fixe tout particulièrement destinée aux arbres de pompe ou analogues.

Depuis longtemps on utilise pour assurer l'étanchéité du passage d'un arbre rotatif dans une paroi des dispositifs comportant des garnitures tressées mais de plus en plus souvent actuellement on leur préfère des garnitures mécaniques. Ces garnitures mécaniques comportent un grain fixe porté par un couvercle maintenu sur la paroi et un grain mobile porté par une bague tournant avec l'arbre à étancher, cette bague étant repoussée axialement par un système élastique qui assure un contact constant entre le grain fixe et le grain mobile. Une telle garniture assure une étanchéité réelle entre l'arbre rotatif et la paroi fixe qu'il traverse mais présente le gros inconvénient d'être constituée par des pièces indépendantes les unes des autres qui doivent être montées une à une sur l'arbre et en outre d'exiger un réglage précis lors de ce montage et chaque fois que pour une raison ou une autre l'arbre doit être retiré de la paroi et remis en place.

La présente invention a pour but de remédier à ces inconvénients en réalisant une garniture mécanique qui forme un ensemble pré-réglé susceptible d'être transporté et monté ou mis en place comme un tout.

Cette invention a en effet pour objet une garniture mécanique du type comportant un grain fixe porté par une bride de fixation sur la paroi et un grain tournant porté par une bague mobile susceptible d'être entrainée en rotation par l'arbre, et repoussée axiale-

2

ment contre le grain fixe par un système élastique, qui comporte un fourreau qui est muni de moyens de solidarisation à l'arbre, traverse axialement mais avec jeu la bride de fixation et le grain fixe et porte de part et d'autre de ses organes, un dispositif d'arrêt et la bague de support du grain mobile dont il est solidaire en rotation, et une butée montée entre la bride de fixation et le fourreau de sorte que ce dernier supporte la bride et en est solidaire axialement.

Tous les organes qui constituent une telle garniture sont montés sur le fourreau qui les supporte et mis en place en usine de sorte que l'ensemble de la garniture peut être transporté, manipulé, monté ou démonté comme un ensemble unitaire. La seule fixation du fourreau sur l'arbre suffit à mettre en place la garniture et à la rendre solidaire de ce dernier qu'il soit en position d'utilisation dans la pompe ou qu'il en soit retiré en vue d'une maintenance ou autre.

Un système élastique est interposé entre la bague de support du grain mobile et l'extrémité du fourreau et ce système est également réglé au préalable en usine lors de l'assemblage de la garniture. Par suite aucun réglage n'est plus nécessaire lors de la mise en place de l'arbre sur la pompe il suffit de fixer la bride de support du grain fixe.

La description ci-dessous d'un mode de réalisation donné à titre d'exemple non limitatif et représenté aux dessins annexés fera d'ailleurs ressortir les avantages et caractéristiques de l'invention. Sur ces dessins

- la Fig.1 est une vue schématique, de côté, avec arrachement partiel, d'un arbre muni d'une garniture mécanique selon l'invention avant son assemblage sur le corps d'une pompe centrifuge.

- la Fig.2 est une vue analogue à la Fig.1 montrant l'arbre en position d'utilisation sur la pompe.

- la Fig.3 est une vue à plus grande échelle, en

3

coupe longitudinale, de la garniture mécanique en position entre l'arbre et le corps de la pompe.

- la Fig.4 est une vue partielle, en coupe radiale à plus grande échelle, d'un dispositif d'arrêt selon une variante de réalisation en position de maintien de la bride.

- la Fig.5 est une vue analogue à la fig.4 du dispositif d'arrêt en position d'utilisation de la garniture.

Bien que les dessins concernent plus particulièrement l'application de la garniture mécanique de l'invention à l'étanchéité entre l'arbre d'une pompe centrifuge et le corps de cette pompe, il est bien évident que ceci n'est indiqué qu'à titre d'exemple pour faciliter la compréhension et que de telles garnitures peuvent être utilisées dans de nombreux types de dispositifs, chaque fois qu'un arbre rotatif doit traverser de manière étanche une paroi fixe.

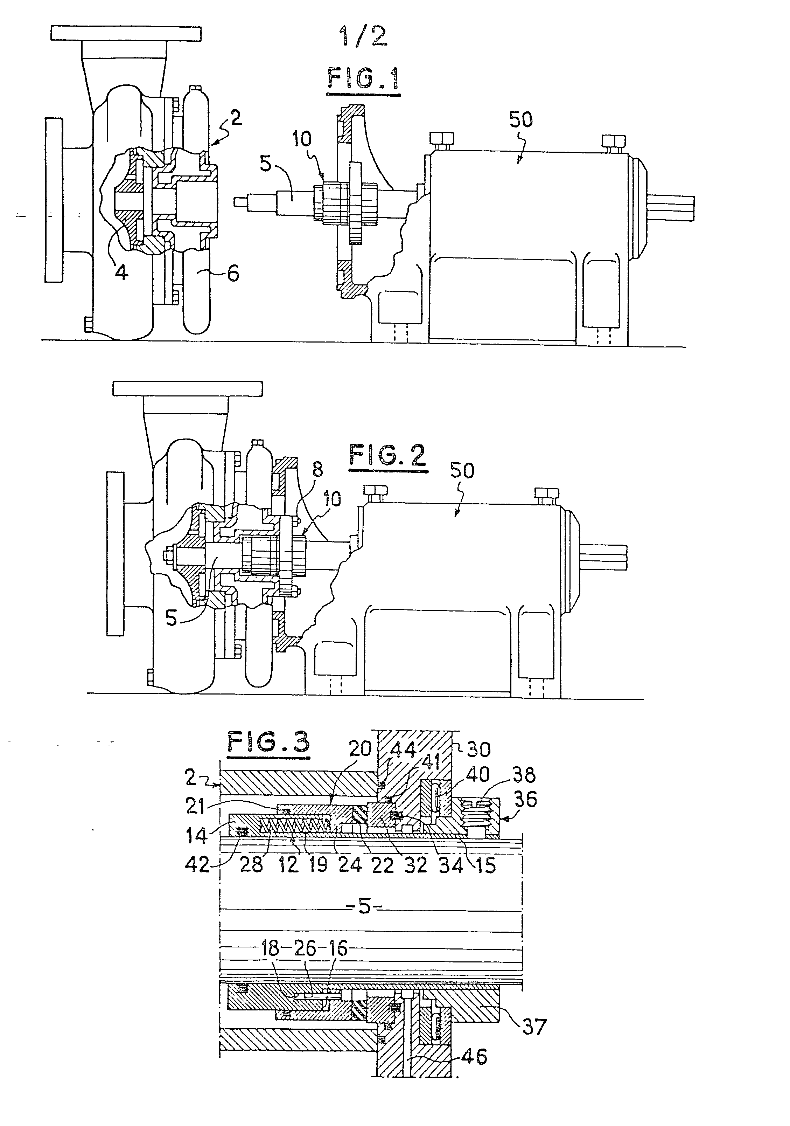

Une pompe centrifuge telle que la pompe 2 représentée sur la Fig.1 comporte un rotor 4 entraîné en rotation par un arbre 5 faisant saillie à l'extérieur du corps de la pompe 2. L'arbre 5 doit donc pouvoir tourner librement par rapport au corps de la pompe et éventuellement par rapport à une chemise de refroidissement 6 sans être la cause de fuites du fluide pompé. Dans ce but une garniture mécanique 10 est montée sur l'arbre 5 et fixée sur le corps de la pompe par exemple par des vis telles que les vis 8 représentées sur la Fig.2.

La garniture mécanique 10 selon l'invention est montée sur l'arbre avant sa mise en place dans le corps de la pompe 2. Dans ce but cette garniture comporte un fourreau 12 qui est cylindrique et à un diamètre interne sensiblement égal au diamètre externe de l'arbre 5 (Fig.3). La surface extérieure du fourreau 12 est formée

4

par deux parties de diamètres différents respectivement 14 et 15 réunies entre elles par un épaulement externe 16. Sur la partie de grand diamètre 14 coulisse axialement une bague 20 qui porte un grain 22 constituant le grain mobile de la garniture. La bague 20 comporte une collerette interne 24 dans laquelle sont fixés des pions axiaux 26 qui coulissent librement dans des trous borgnes 18 ménagés dans la partie épaisse 14 du fourreau 12 et rendent ainsi la bague 20 solidaire en rotation de ce fourreau. En outre un joint torique 21 assure l'étanchéité entre la bague et la surface extérieure de la partie 14 tandis que des ressorts 28 montés dans des trous borgnes 19 ménagés parallèlement aux trous borgnes 18, dans la portion 14 du fourreau 12, et isolés du fluide par le joint 21 repoussent la bague 20 et tendent à l'écarter de la partie 14 afin d'appliquer le grain mobile 22 contre un grain fixe 32.

Autour du fourreau 12 est en effet montée une bride de fixation 30, qui est de préférence annulaire et est munie en différents points de lumières permettant le montage de goujons destinés à la fixation sur le corps de la pompe ou autre dispositif. La bride 30 porte un grain annulaire 32, destiné à constituer le grain fixe de la garniture, qui est maintenu par des pions de solidarisation en rotation 34. Bien entendu un joint 41, de préférence torique, est interposé entre la bride de fixation 30 et le grain fixe 32. Le grain 32 et la bride 30 sont montés coaxialement au fourreau 12, mais avec un jeu suffisant entre eux et ce fourreau pour que ce dernier soit libre en rotation par rapport au grain 32 et à la bride 30. La bride 30 est toutefois maintenue axialement par un dispositif mécanique d'arrêt 36 fixé sur l'extrémité du fourreau 12 au moyen de vis traversant chacune un trou de ce fourreau. Selon le mode de réalisation représenté sur la figure 3, le dispositif mécanique d'arrêt 36 comporte une bague d'arrêt 37 enfi-

5

lée sur le fourreau 12 et immobilisée par rapport à celui-ci par au moins une vis 38, et une butée à aiguilles 40 montée entre un épaulement de cette bague 37 et la bride 30.

Grâce à cette disposition la bride de fixation 30 ainsi que le grain fixe qu'elle porte, de même que la bague mobile 20, sont supportés par le fourreau et peuvent être déplacés avec lui chaque fois que c'est nécessaire. En outre un pré-réglage en usine, lors du montage des différentes pièces qui constituent la garniture, de la position et/ou de la dimension du dispositif d'arrêt 36 permet d'obtenir le réglage de la compression des ressorts 28 en fonction de l'utilisation à laquelle la garniture est destinée.

Il suffit ensuite lors de cette utilisation d'enfiler le fourreau 12 sur l'arbre 5 et de serrer plus profondément la ou les vis 38 de maintien du dispositif d'arrêt 36 pour rendre la garniture mécanique solidaire de cet arbre 5, comme représenté sur la figure 1. La garniture mécanique est alors montée en même temps que l'arbre 5, et son palier 50, sur le corps de la pompe 2, un simple vissage des vis 8 sur le corps de cette pompe assurant la mise en place de la garniture, de manière appropriée.

Un joint torique 42 monté entre le fourreau 12 et l'arbre 5, de même qu'un joint torique 44 monté sur la bride de fixation 30 dans une gorge ménagée sur la face destinée à venir en regard de la pompe, complètent l'étanchéité fournie par la garniture mécanique. A chaque instant les ressorts 28 serrent le grain mobile 22 contre le grain 32 et, en combinaison avec les joints toriques 21, 41, 42, 44, interdisent toutes fuites du fluide de la pompe autour de l'arbre 5, entre lui et le corps 2 de la pompe.

La bride 30 est libre en rotation par rapport au fourreau 12 mais reste solidaire axialement de ce der-

6

nier.

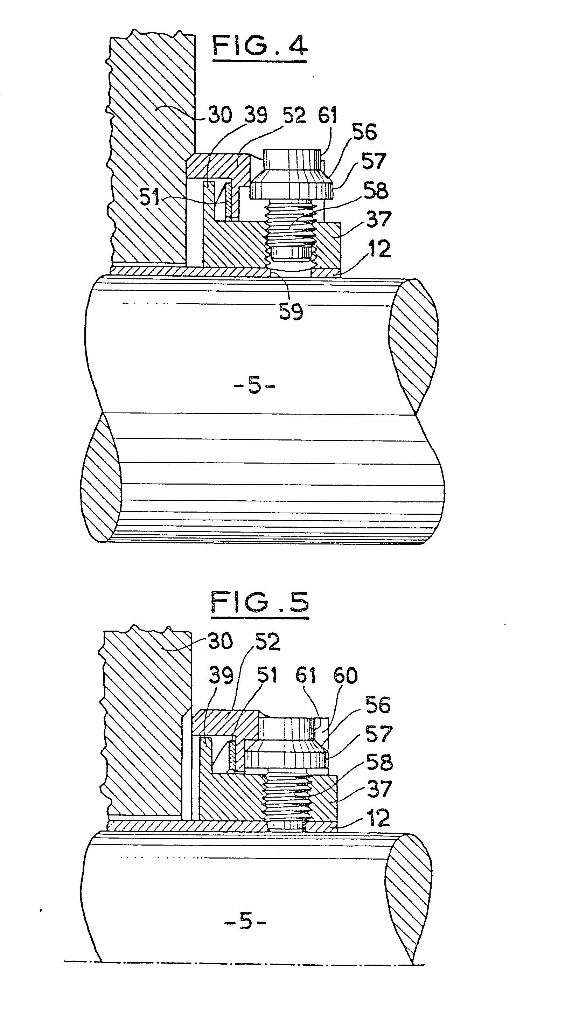

Il peut donc, dans certains cas, être préférable d'utiliser un dispositif d'arrêt permettant de rendre la bride totalement indépendante du fourreau une fois la garniture montée sur la pompe, bien qu'elle soit supportée par lui avant ce montage. Un exemple d'un tel dispositif est représenté sur la figure 4.

Il comporte une rondelle élastique 51 maintenue entre un rebord 39 de la bague d'arrêt 37 et un épaulement d'une bague de butée 52 coaxiale à la bague d'arrêt 37. La bague d'arrêt 37 est immobilisée par rapport au fourreau 12 par des vis de maintien, non représentées. La bague de butée 52 est, par contre, déplacée axialement dans un sens par la rondelle élastique 51 et, dans l'autre, par des rampes tronconiques 56 formées sur les têtes élargies 57 de vis de maintien 58 vissées dans la bague 37 et susceptibles de traverser des trous 59 du fourreau 12. Chacune des têtes 57 est logée dans un évidement 60 de la bague de butée 52 et sa rampe 56 coopère avec un bossage 61 en saillie dans cet évidement pour repousser la bague de butée 52 en direction de la bride 30, contre l'action de la rondelle élastique 51, lorsque la vis 58 ne traverse pas le fourreau 12.

Dans cette position (partie supérieure de la fig. 4) la bague de butée 52 est emboîtée contre un épaulement de la bride 30, qui est ainsi supportée par le fourreau 12, complètement solidaire de ce dernier et de l'ensemble de la garniture et peut servir de contre butée au grain fixe pour le réglage du système élastique.

Par contre lorsque la garniture est montée sur l'arbre 5 et que les vis 58 sont vissées dans la bague 37, la rampe 56 de chaque tête 57 glisse sur le bossage 61 et le quitte, ce qui permet à la rondelle 51 de repousser la bague de butée 52 et ainsi de la rétracter dans le dispositif d'arrêt. La bride 30 non seulement est libre en rotation par rapport au fourreau 12, mais

7

également dispose d'un léger jeu axial par rapport au dispositif d'arrêt qui tourne en même temps que l'arbre 5 et le fourreau. Les frottements parasites sont ainsi éliminés en marche normale.

Inversement, un simple dévissage des vis 58 solidarise à nouveau la bride 30 avec le reste de la garniture. Tous les organes reprennent leurs positions relatives de réglage, le dispositif d'arrêt ayant un effet réversible.

Lorsque l'arbre a besoin d'être démonté pour une maintenance ou un remplacement, la garniture mécanique à simple effet est démontée en même temps mais comme un ensemble unitaire qui peut ensuite être retiré de l'arbre et remis en place ou remplacé par un autre. Dans tous les cas, le montage et le démontage de la garniture mécanique sont rapides et ne demandent aucune manoeuvre spécialisée ni aucun réglage, l'ensemble étant entièrement préparé et réglé en usine. La seule précaution à prendre est celle qui concerne l'orientation de la bride de fixation et notamment du canal de drainage 46 que comporte cette bride et qui doit être maintenu en position verticale, dirigé vers le bas.

## REVENDICATIONS

1. Garniture mécanique d'étanchéité à simple effet, entre un arbre rotatif et une paroi fixe, comportant un grain fixe porté par une bride de fixation sur la paroi et un grain tournant porté par une bague mobile entraînée en rotation par l'arbre et repoussée axialement contre le grain fixe par un système élastique, caractérisée en ce qu'elle comporte un fourreau muni de moyens de solidarisation à l'arbre qui traverse axialement avec jeu la bride de fixation et le grain fixe et porte, de part et d'autre de ces organes, un dispositif d'arrêt et la bague de support du grain mobile dont il est solidaire en rotation; et une butée montée entre la bride de fixation et le fourreau, de sorte que ce dernier supporte la bride et en est solidaire axialement.

2. Garniture suivant la revendication 1, caractérisée en ce qu'elle comporte des vis de blocage sur l'arbre qui traversent le dispositif d'arrêt.

3. Garniture suivant l'une des revendications 1 et 2, caractérisée en ce que le fourreau comporte deux parties d'épaisseur différente, la portion de plus grande épaisseur formant surface de guidage du coulissement de la bague mobile et portant le système élastique d'application du grain mobile contre le grain fixe.

4. Garniture suivant l'une des revendications 1 à 3, caractérisée en ce qu'elle comporte des pions de solidarisation en rotation de la bague mobile et de la partie de plus grande épaisseur du fourreau fixée dans la bague et susceptible de coulisser axialement dans des trous borgnes du fourreau.

5. Garniture suivant l'une des revendications 1 à 4, caractérisée en ce que la butée est une butée à aiguilles.

6. Garniture mécanique suivant les revendications

9

1 à 4, caractérisée en ce que la butée est constituée par un dispositif mécanique à ressort, escamoté automatiquement par les moyens de solidarisation à l'arbre et ménageant, dans cette position escamotée, un jeu axial entre lui et la bride de fixation.

7. Garniture suivant la revendication 6, caractérisée en ce que le dispositif d'arrêt comporte une bague de butée serrée contre la bride par les moyens de solidarisation en position de non utilisation et écartée élastiquement loin de cette bride lors de la mise en place des moyens de solidarisation.

## FIG.1

## FIG.2

## FIG.3

## FIG.4

## FIG.5

0032323

Numéro de la demande

**RAPPORT DE RECHERCHE EUROPEENNE**

EP 80 40 0043

Office européen
des brevets

| Catégorie | DOCUMENTS CONSIDERES COMME PERTINENTS | | CLASSEMENT DE LA DEMANDE (Int. Cl. ³) |
| --- | --- | --- | --- |
| | Citation du document avec indication, en cas de besoin, des parties pertinentes | Revendica- tion concernée | |
| X | FR - A - 2 353 711 (MECANIQUE INDUSTRIELLE)<br><br>* Page 3, ligne 25 - page 5, ligne 27; figures * | 1 | F 16 J 15/34 |
| X | US - A - 3 758 179 (SMITH)<br><br>* Colonne 2, ligne 16 - colonne 5, ligne 15; figures 1-7 * | 1-5 | |
| X | US - A - 3 727 924 (HENDERSON)<br><br>* Colonne 2, ligne 34 - colonne 3, ligne 67; figures 1-4 * | 1,3,4, 7 | **DOMAINES TECHNIQUES RECHERCHES (Int. Cl. ³)**<br><br>F 16 J 15/00 |
| A | US - A - 2 140 304 (WISHART)<br><br>* Page 1, ligne 53 - page 2, ligne 2; figures 1-8 * | 1 | |
| A | US - A - 2 525 366 (MEYER)<br><br>* Colonne 3, ligne 7 - colonne 5, ligne 48; figures 1-3 * | 1 | |
| A | FR - A - 2 391 380 (KUPFER-ASBEST)<br><br>* Résumé 1; figures 1-5 * | 1 | **CATEGORIE DES DOCUMENTS CITES**<br><br>X. particulièrement pertinent<br>A. arriere-plan technologique<br>O. divulgation non-écrite<br>P. document intercalaire<br>T. theorie ou principe a la base de l'invention<br>E: demande faisant interference<br>D. document cite dans la demande<br>L. document cite pour d'autres raisons<br><br>&. membre de la même famille, document correspondant |

Le present rapport de recherche a ete etabli pour toutes les revendications

| Lieu de la recherche | Date d'achevement de la recherche | Examinateur |
| --- | --- | --- |
| La Haye | 18-07-1980 | LEGER |

OEB Form 1503.1   06.78